# EUROPEAN PATENT SPECIFICATION

(11) **EP 2 886 331 B1**
(45) Date of publication and mention of the grant of the patent: **25.12.2019**
(21) Application number: 13879481.3
(22) Date of filing: 29.07.2013
(51) Int. Cl.: B32B 37/12, B32B 38/14

(54) **LAMINATE COMPRISING ADHESIVE LAYER AND METHOD FOR MANUFACTURING SAME**
LAMINAT UMFASSENDE KLEBSCHICHT UND VERFAHREN ZU DEREN HERSTELLUNG
STRATIFIÉ COMPRENANT UNE COUCHE ADHÉSIVE ET PROCÉDÉ DE FABRICATION ANOCIÉ

(30) Priority: 14.08.2012 KR 20120088676
(43) Date of publication of application: 24.06.2015
(73) Proprietor: LG CHEM, LTD., Yeongdeungpo-gu Seoul 07336 (KR)
(72) Inventor: YOON, Chan Oh, Cheongju-si Chungcheongbuk-do 361-230 (KR); KIM, Jang Soon, Seongnam-si Gyeonggi-do 463-889 (KR); PARK, Sung Chan, Seoul 130-767 (KR); CHO, Young Sung, Seoul 138-798 (KR); KIM, Kyung Tae, Seoul 135-926 (KR); PARK, Eun Kyung, Seoul 122-081 (KR); JUNG, Bu Gi, Anyang-si Gyeonggi-do 431-837 (KR); KIM, Won Ho, Seoul 151-848 (KR)
(74) Representative: Plasseraud IP
(86) International application number: PCT/KR2013/006766
(87) International publication number: WO 2014/027769

(56) References cited:
- WO-A1-2009/018094
- WO-A2-2011/112447
- CN-A- 102 508 571
- JP-A- H0 789 010
- JP-A- 2008 095 057
- US-A- 4 133 926
- US-A- 4 454 179
- US-A- 4 454 179
- US-A1- 2012 003 441
- US-A1- 2012 018 186

## Description

### [Technical Field]

The present invention relates to a method for manufacturing a laminate.

### [Background Art]

Recently, electronics, such as PDAs, mobile communication devices, vehicle navigation systems and the like, form a large market. When the electronics include a touchscreen or touch panel switch mounted in an input operation unit thereof, a transparent conductive plastic film is used for the purpose of production of lightweight electronics, prevention of breakage, and the like. For example, there is a transparent conductive film in which a conductive layer such as indium tin oxide (ITO) and the like is formed on one surface of a polyethylene terephthalate (PET) film, and the transparent conductive film is stacked on conductive glass, a reinforcing material, a decorative film or the like via an adhesive layer. Here, when the conductive glass, the reinforcing material or the decorative film, on which the transparent conductive film is stacked, includes a printed portion, and the adhesive layer and the transparent conductive film are stacked on the printed portion, a step is formed corresponding to a height of the printed portion, thereby causing a light bending phenomenon at a step portion.

A method for manufacturing a laminate according to the background art is for instance disclosed in WO 2009/018094 A1.

### [Disclosure]

### [Technical Problem]

The present invention provides a method for manufacturing a laminate as defined in claim 1.

### [Technical Solution]

In accordance with one aspect, not within the scope of the present invention, a laminate includes a first adhesive composite layer formed by embedding a printed portion in an adhesive portion.

The first adhesive composite layer may have one surface which is a flat surface exposing only the adhesive portion.

The first adhesive composite layer may have one surface exposing both the printed portion and the adhesive portion.

A surface exposing the adhesive portion of the first adhesive composite layer may exhibit adhesion due to the presence of one selected from the group consisting of hydroxyl, carbonyl, aldehyde, haloformyl, carbonate ester, carboxylate, carboxyl, ester, hydroperoxy, peroxy, ether, hemiketal, acetal, o-ester, o-carbonate ester, carboxylic acid, amide, amine, imine, azide, azo compound, cyanate, nitrate, nitrile, nitro compound, nitroso compound, thiol, sulfonic acid groups, and combinations thereof.

The laminate may include a substrate having one surface on which the printed portion is formed.

The substrate may be a hard coating layer or a window glass.

The hard coating layer may include one selected from the group consisting of acrylic, silica, urethane, imide compounds, and combinations thereof.

The laminate may include a release film layer stacked on the other surface of the substrate, on the one surface of the adhesive layer exposing only the adhesive portion, or both.

The laminate may include a second adhesive layer and a release film layer, which are sequentially stacked on the other surface of the substrate.

The release film layer may include one selected from the group consisting of polyethylene terephthalate, a release silicone-coated silicone layer, combinations thereof.

The printed portion may have a thickness of about 5 µm to about 75 µm.

The first adhesive composite layer may have a thickness of about 10 µm to about 200 µm.

The adhesive portion may include one selected from the group consisting of 2-ethylhexyl acylate (2-EHA), isobornyl acrylate (IBOA), hydroxyethyl acrylate (HEA), hydroxybutyl acrylate (HBA), hydroxypropyl acryalte (HPA), hexyl methacrylate (HMA), photoinitiators, curing agents, additives, and combinations thereof.

The printed portion may include one selected from the group consisting of black inks, white inks, pink inks, and combinations thereof.

In accordance with the present invention, a method for manufacturing a laminate includes: forming a printed portion on a substrate; and forming a first adhesive composite layer including the printed portion and an adhesive portion by coating an adhesive composition such that the printed portion is embedded therein, followed by curing the adhesive composition.

In the method for manufacturing a laminate, the adhesive composition is coated onto the substrate and the printed portion such that the first adhesive composite layer has a flat upper surface.

The adhesive portion exhibiting adhesion is formed by coating the adhesive composition, followed by curing the adhesive composition for 0.1 minute to 10 minutes through irradiation with light at a wavelength of 180 nm to 400 nm.

The method for manufacturing a laminate further includes stacking a release film layer on an outermost surface of the laminate such that the substrate, the first adhesive composite layer and the release film are sequentially stacked.

The method for manufacturing a laminate further includes: forming a second adhesive layer by coating the adhesive composition onto the other surface of the substrate, on which the printed portion is not formed, followed by curing the adhesive composition; and stacking a second release film on the other surface of the substrate, on which the printed portion is not formed, via the second adhesive layer.

In accordance with a further aspect, not within the scope of the present invention, a method for applying the laminate includes peeling off the release film layer of the laminate to expose the first adhesive composite layer or the second adhesive layer, followed by attaching the laminate to a target material.

### [Advantageous Effects]

The laminate can prevent a light bending phenomenon due to a step, have a reduced thickness, be manufactured by a simplified process, and resolve a problem due to poor lamination.

### [Description of Drawings]

Fig. 1 is a schematic diagram of a laminate according to one embodiment, not within the scope of the present invention.
Fig. 2 is a schematic diagram of a laminate according to another embodiment, not within the scope of the present invention.
Fig. 3 is a picture of a laminate prepared in Example 1.
Fig. 4 is a picture of a laminate prepared in Comparative Example 1.

### [Best Mode]

Hereinafter, embodiments of the present invention will be described in detail with reference to the accompanying drawings. It should be understood that the present invention is not limited to the following embodiments and may be embodied in different ways.

In the drawings, portions irrelevant to the description will be omitted for clarity. Like components will be denoted by like reference numerals throughout the specification.

In the drawings, thicknesses are enlarged for clear expression of various layers and regions. In addition, thicknesses of some layers and regions are exaggerated for convenience.

It will be understood that, when an element such as a layer, film, region or substrate is referred to as being placed "on (or under or below)" another element, it can be directly placed on (or under or below) the other element, or intervening layer(s) may also be present.

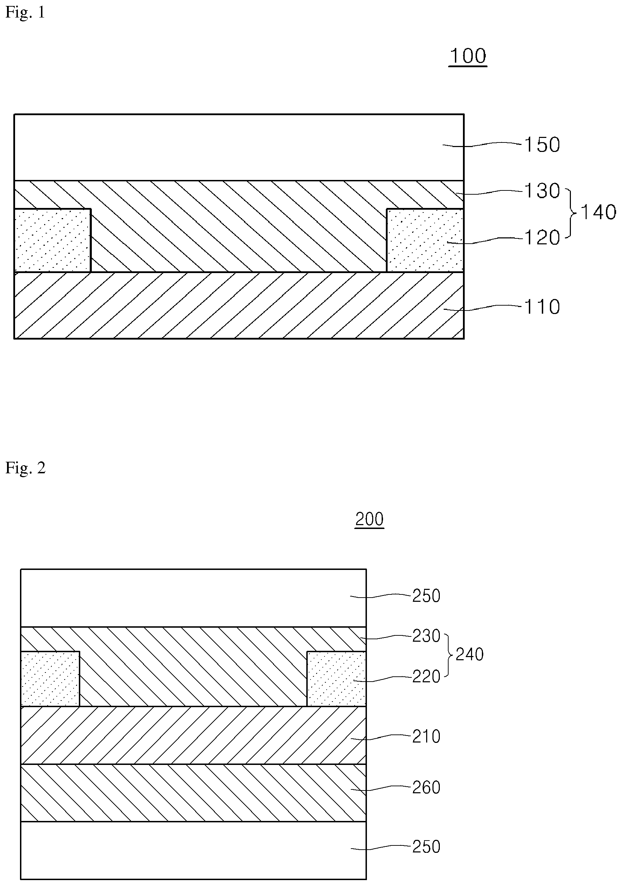

Fig. 1 is a sectional view of a laminate 100 including a first adhesive composite layer 140 according to one embodiment, not within the scope of the present invention.

The first adhesive composite layer 140 has a structure including a printed portion 120 and an adhesive portion 130 in which the printed portion 120 is buried. In one embodiment, the printed portion 120 may be formed on a substrate 110, and an adhesive composition is then coated such that the printed portion 120 is buried therein, followed by curing the adhesive composition, thereby forming the first adhesive composite layer 140.

As such, the first adhesive composite layer 140 is formed such that one surface of the first adhesive composite layer 140 is a surface exposing both the printed portion and the adhesive portion and the other surface thereof is a surface exposing only the adhesive portion. The surface exposing only the adhesive portion may be a flat surface. The first adhesive composite layer 140 may be used as an adhesive layer interposed, for example, between a window glass of a display of devices, such as mobile devices, tablet PCs and the like, and a transparent conductive film in order to stack the transparent conductive film on the window glass, and the one surface of the first adhesive composite layer 140, which is formed as a flat surface, may be brought into contact with and stacked on the transparent conductive film. Here, there is an advantage of no step being formed due to the printed portion 120.

When the first adhesive composite layer 140 is applied to screens, panels or the like of displays, the adhesive composition may use any components known in the art such that the adhesive portion 130 is formed as an optically clear adhesive (OCA) layer. Specifically, the adhesive composition may be a composition including: a monomer selected from the group consisting of 2-ethylhexyl acylate (2-EHA), isobornyl acrylate (IBOA), hydroxyethyl acrylate (HEA), hydroxybutyl acrylate (HBA), hydroxypropyl acryalte (HPA), hexyl methacrylate (HMA), combinations thereof, and the like; a photoinitiator; a curing agent; other additives, and the like. For example, the adhesive composition may be subjected to photocuring or thermal curing through irradiation with light such as UV light, thereby forming the adhesive portion 130. If the adhesive portion 130 is formed by thermal curing, there can occur loss of the printed portion 120 due to a solvent, whereas if the adhesive portion 130 is formed by photocuring, such loss of the printed portion 120 can be minimized and a thickness of the first adhesive composite layer 140 can be more easily adjusted.

The first adhesive composite layer 140 may have a thickness of, for example, about 10 µm to about 200 µm. Within this range, the first adhesive composite layer 140 can sufficiently cover the printed portion 120 which may be formed to a thickness of about 5 µm to about 75 µm. Here, since the thickness of the first adhesive composite layer 140 should be a thickness allowing the printed portion 120 to be buried, the thickness of the first adhesive composite layer 140 is thicker than that of the printed portion 120.

Since the adhesive portion 130 is an adhesive layer exhibiting adhesion, a functional group, such as a hydroxyl group, a carbonyl group, an aldehyde group, a haloformyl group, a carbonate ester group, a carboxylate group, a carboxyl group, an ester group, a hydroperoxy group, a peroxy group, an ether group, a hemiketal group, an acetal group, an o-ester group, an o-carbonate ester group, a carboxylic acid group, an amide group, an amine group, an imine group, an azide group, an azo compound group, a cyanate group, a nitrate group, a nitrile group, a nitro compound group, a nitroso compound group, a thiol group, a sulfonic acid group, and combinations thereof, may be present on a surface of the adhesive portion 130. That is, the surface exposing the adhesive portion 130 of the first adhesive composite layer 140 may be a surface which has a functional group and is given adhesion.

As such, since the surface exposing the adhesive portion 130 of the first adhesive composite layer 140 exhibits adhesion, an additional adhesive layer is not required and the laminate can be directly attached to a target material (not shown) via the adhesive portion 130.

The printed portion 120 may be formed of materials having various colors such as black inks, white inks, pink inks and the like, and may be formed by any method known in the art using a material known in the art. For example, the printed portion 120 may be formed on the substrate 110 by a method such as silk screen coating of a composition for formation of the printed portion, and the like.

The printed portion 120 may have a thickness of about 5 µm to about 75 µm.

The substrate 110 may be a target material on which the printed portion 120 will be formed. For example, the substrate 110 may be a hard coating layer or a widow glass layer. The hard coating layer may include, for example, materials such as acrylic, silica, urethane, imide compounds, and combinations thereof, without being limited thereto. The widow glass layer may be, for example, a layer applied as a cover glass for screens, panels or the like of displays of mobile devices, tablet PCs and the like, and may include, for example, tempered glass products available from Corning Co., Ltd., Asahi Co., Ltd. and NEG Co., Ltd., and the like.

The laminate 100 may have a structure in which a release film layer 150 is stacked on the one surface exposing only the adhesive portion 130 of the first adhesive composite layer 140. Upon application of the laminate 100 to a target material (not shown), the adhesive portion 130 may be attached to the target material by removing the release film layer 150 from the laminate.

For example, when the laminate 100 is applied to screens, panels or the like of displays of mobile devices, tablet PCs and the like, the target material may be a transparent conductive film in which a conductive layer such as indium tin oxide (ITO) and the like is formed on one surface of a polyethylene terephthalate (PET) film used as a substrate. Thus, the target material may be a polyethylene terephthalate (PET) film subjected to hard coating treatment or not, or an indium tin oxide conductive layer.

The release film layer may include polyethylene terephthalate, a release silicone-coated silicone layer, combinations thereof, and the like.

Fig. 2 is a sectional view of a laminate 200 including a first adhesive composite layer 240 according to another embodiment, not within the scope of the present invention.

As described above, the laminate 200 includes the first adhesive composite layer 240 including a printed portion 220 and an adhesive portion 230, which are formed on a substrate 210, and includes a release film layer 150 formed on an upper side of the first adhesive composite layer 240.

Upon application of the laminate 200, there may be a need to impart adhesion to an outer surface of the substrate 210. In this case, a second adhesive layer 260 is formed by coating an adhesive composition onto the other surface of the substrate 210, on which the printed portion 220 is not formed, followed by curing, and the release film layer 250 is further formed thereon. Upon application of the laminate 200 to a target material (not shown), the release film layer 250 may be removed from the laminate 200, which in turn is attached to the target material via the second adhesive layer 260. For example, when the laminate 200 is applied to screens or panels of displays of mobile devices, tablet PCs and the like, the target material may be a display module.

The second adhesive layer 260 is formed, for example, using the adhesive composition forming the adhesive portion 230, and may be formed as an optically clear adhesive (OCA) layer by any method known in the art.

In accordance with another aspect, not within the scope of the present invention, a method for applying the laminate according to the present invention include peeling the release film layer 150 or 250 off of the laminate 100 or 200 to expose the first adhesive composite layer 140 or 240 or the second adhesive layer 260, followed by attaching the laminate 100 or 200 to a target material.

Since the printed portion and the adhesive portion are integrated as one layer in the laminate 100, 200 and an upper surface of the first adhesive composite layer is formed as a flat surface without a step due to the printed portion, it is possible to prevent a light bending phenomenon, which is a problem when a print layer having a step is formed and stacked on an adhesive layer. In addition, since there occurs no light bending phenomenon at an edge when the laminate 100 or 200 is applied, for example, to screens or panels of displays of mobile devices, tablet PCs and the like, the displays can have enlarged view areas and thus exhibit improved visibility.

Further, since the printed portion and the adhesive portion are integrated as one layer in the laminate 100 or 200, the laminate 100 or 200 can have a reduced thickness, as compared with laminates in which a separate adhesive layer is stacked on an upper side of the print layer. In terms of a process, since a separate stacking process, which is required upon stacking the adhesive layer, can be omitted, there is an advantage of process simplification, and a problem due to poor stacking can be solved.

In accordance with the present invention, a method for manufacturing a laminate includes: forming a printed portion on a substrate; and forming a first adhesive composite layer including the printed portion and an adhesive portion by coating an adhesive composition such that the printed portion is embedded therein, followed by curing the adhesive composition.

The laminate as set forth above may be manufactured by the method.

Upon coating of the adhesive composition, the adhesive composition is coated onto the substrate and the printed portion such that an upper surface of the first adhesive composite layer is formed as a flat surface.

Details of the adhesive composition have been described above.

The adhesive composition may be cured by photocuring with UV light or the like and thus form the adhesive portion. Curing may be performed by any method which is known in the art and can form an adhesive layer exhibiting adhesion. For example, the adhesive portion exhibiting adhesion may be formed by curing the adhesive composition for a long period of time using a low intensity light source. Specifically, curing is performed for 0.1 minute to 10 minutes by irradiation with light at a wavelength of 180 nm to 400 nm.

The laminate include s a release film layer formed on at least one outermost surface thereof.

The method for manufacturing the laminate further includes stacking the release film layer on the outermost surface of the laminate such that the first adhesive composite layer and the release film layer are sequentially stacked on the substrate.

To stack the release film layer on the other surface of the substrate on which the printed portion is not formed, the method for manufacturing a laminate further includes: forming a second adhesive layer first by coating the adhesive composition as set forth above onto the other surface of the substrate on which the printed portion is not formed, followed by curing the adhesive composition; and stacking the release film layer on the other surface of the substrate, on which the printed portion is not formed, via the second adhesive layer.

The adhesive composition may be cured by photocuring using UV or the like and thus form the second adhesive layer. Curing may be performed by any method which is known in the art and can form an adhesive layer exhibiting adhesion. For example, the adhesive portion may be formed by curing of the adhesive composition for a long period of time using a low intensity light source. Specifically, curing is performed for 0.1 minute to 10 minutes by irradiation with light at a wavelength of 180 nm to 400 nm.

Hereinafter, the present invention will be described in more detail with reference to some examples. It should be understood that these examples are provided for illustration only and are not to be construed in any way as limiting the present invention.

### (EXAMPLES)

### Example 1

An adhesive composition including 2-ethylhexyl acrylate (2-EHA), isobornyl acrylate (IBOA), hydroxyethyl acrylate (HEA), a photoinitiator, a curing agent and other additives was coated onto a printed PET film, thereby forming a 100 µm thick adhesive portion such that the adhesive portion sufficiently covered a 35 µm thick printed portion and had a flat upper surface thereof. Next, the adhesive composition was cured through a UV type curing oven, thereby manufacturing a laminate in which a first adhesive composite layer was formed.

### Comparative Example 1

A 35 µm thick printed portion was formed on a PET film. Separately, a sheet of a 100 µm thick adhesive layer formed by UV curing of an adhesive composition, which included 2-ethylhexyl acrylate (2-EHA), isobornyl acrylate (IBOA), hydroxyethyl acrylate (HEA), a photoinitiator, a curing agent and other additives, was manufactured. The sheet of the adhesive layer was laminated on the printed portion-formed PET film, thereby manufacturing a laminate.

### Evaluation

Each of the laminates prepared in Example 1 and Comparative Example 1 was evaluated as to a degree of unevenness of light at an edge by the following method.

Measurement was performed by photographing a picture and a degree of unevenness of light was determined based on whether a phenomenon of downward bending of light at an edge occurred.

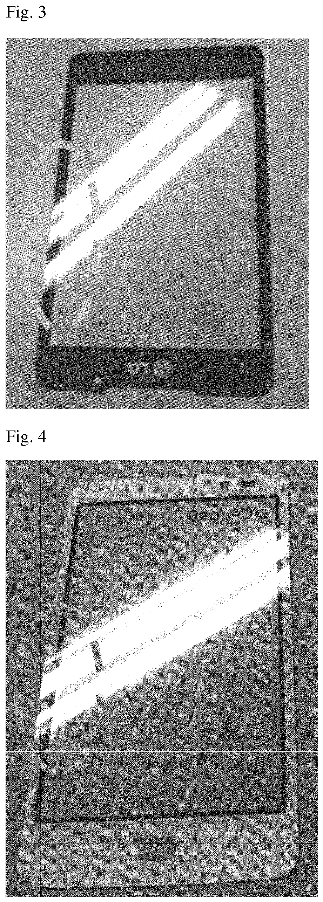

Fig. 3 is a picture of a laminate prepared in Example 1, and since there occurred no phenomenon of downward bending of diagonal-direction light, it could be confirmed that there was no unevenness of light. On the other hand, Fig. 4 is a picture of a laminate prepared in Comparative Example 1, and since there occurred a phenomenon in which diagonal-direction light was bent downwards along a curved surface at an edge, it could be confirmed that there was unevenness of light.

### <List of Reference Numerals>

100, 200: Laminate
110, 210: Substrate
120, 220: Printed portion
130, 230: Adhesive portion
140, 240: First adhesive composite layer
150, 250: Release film layer
260: Second adhesive layer

## Claims

1. A method for manufacturing a laminate (200), consisting of:
forming a printed portion (220) on a substrate (210);
forming a first adhesive composite layer (240) comprising the printed portion (220) and an adhesive portion (230) by coating an adhesive composition such that the printed portion (220) is embedded therein, followed by curing the adhesive composition;
stacking a release film layer (250) on an outermost surface of the laminate such that the first adhesive composite layer (240) and the release film layer (250) are sequentially stacked on the substrate;
forming a second adhesive layer (260) by coating the adhesive composition onto the other surface of the substrate (210), on which the printed portion (220) is not formed, followed by curing the adhesive composition; and
stacking a second release film (250) on the other surface of the substrate, on which the printed portion is not formed, via the second adhesive layer (260),
wherein the adhesive composition is coated onto the substrate (210) and the printed portion (220) such that the first adhesive composite layer (240) has a flat upper surface,
the adhesive portion exhibiting adhesion is formed by coating the adhesive composition, followed by curing the adhesive composition for 0.1 minutes to 10 minutes through irradiation with light having a wavelength of 180 nm to 400 nm.

## Patentansprüche

1. Verfahren zur Herstellung eines Laminats (200), bestehend aus:
Ausbilden eines gedruckten Abschnitts (220) auf einem Substrat (210);
Ausbilden einer ersten adhäsiven Kompositschicht (240), die den gedruckten Abschnitt (220) und einen adhäsiven Abschnitt (230) aufweist, durch Auftragen einer adhäsiven Zusammensetzung, so dass der gedruckte Abschnitt (220) darin eingebettet ist, gefolgt durch Härten der adhäsiven Zusammensetzung;
Stapeln einer Trennfilmschicht (250) auf einer äußersten Oberfläche des Laminats, so dass die erste adhäsive Kompositschicht (240) und die Trennfilmschicht (250) sequentiell auf das Substrat gestapelt sind;
Ausbilden einer zweiten adhäsiven Schicht (260) durch Auftragen der adhäsiven Zusammensetzung auf die andere Oberfläche des Substrats (210), auf der der gedruckte Abschnitt (220) nicht ausgebildet ist, gefolgt durch Härten der adhäsiven Zusammensetzung; und
Stapeln eines zweiten Trennfilms (250) auf die andere Oberfläche des Substrats, auf der der gedruckte Abschnitt nicht ausgebildet ist, über die zweite adhäsive Schicht (260);
wobei die adhäsive Zusammensetzung auf das Substrat (210) und den gedruckten Abschnitt (220) derart aufgetragen wird, dass die erste adhäsive Kompositschicht (240) eine flache Oberseite aufweist,
wobei der Adhäsion aufzeigende adhäsive Abschnitt gebildet wird durch Auftragen der adhäsiven Zusammensetzung, gefolgt durch Härten der adhäsiven Zusammensetzung für 0,1 Minuten bis 10 Minuten durch Bestrahlung mit Licht, das eine Wellenlänge von 180nm bis 400nm hat.

## Revendications

1. Procédé de fabrication d'un stratifié (200), comprenant :
la formation d'une portion imprimée (220) sur un substrat (210);
la formation d'une première couche composite adhésive (240) comprenant la portion imprimée (220) et une portion adhésive (230) par le revêtement d'une composition adhésive de sorte que la portion imprimée (220) soit intégrée à celle-ci, suivi du durcissement de la composition adhésive ;
l'empilement d'une couche de film de séparation (250) sur une surface la plus extérieure du stratifié de sorte que la première couche composite adhésive (240) et la couche de film de séparation (250) soient empilées séquentiellement sur le substrat ;
la formation d'une seconde couche adhésive (260) par le revêtement de la composition adhésive sur l'autre surface du substrat (210), sur laquelle la portion imprimée (220) n'est pas formée, suivi du durcissement de la composition adhésive ; et
l'empilement d'un second film de séparation (250) sur l'autre surface du substrat, sur laquelle la portion imprimée n'est pas formée, par le biais de la seconde couche adhésive (260),
dans lequel la composition adhésive est revêtue sur le substrat (210) et la portion imprimée (220) de sorte que la première couche composite adhésive (240) ait une surface supérieure plate,
la portion adhésive présentant une adhérence est formée par le revêtement de la composition adhésive, suivi du durcissement de la composition adhésive pendant 0,1 minute à 10 minutes par l'intermédiaire d'une irradiation avec une lumière ayant une longueur d'onde de 180 nm à 400 nm.
